# EUROPEAN PATENT APPLICATION

(11) **EP 4 671 646 A1**
(43) Date of publication of application: **31.12.2025**
(21) Application number: 24925154.7
(22) Date of filing: 11.12.2024
(51) Int. Cl.: F25B 39/02, A23G 9/22, F25C 1/00

(54) **EVAPORATION DEVICE FOR SLUSHING MACHINE AND REFRIGERATION SYSTEM**

(30) Priority: 30.04.2024 CN 202420951168 U; 06.09.2024 CN 202422198965 U
(71) Applicant: Guangzhou Xin'an Trading Co., Ltd., Guangzhou Guangdong 510000 (CN)
(72) Inventor: CHEN, Kui, Guangzhou, Guangdong 510220 (CN)
(74) Representative: Sun, Yiming
(86) International application number: PCT/CN2024/138336
(87) International publication number: WO 2025/227736

(57) **Abstract**

The present disclosure provides an evaporation device for a slush machine and a refrigeration system. The evaporation device for a slush machine includes an evaporation mechanism, an outer housing sleeved on the evaporation mechanism, and a rotary stirring mechanism provided at one end of the evaporation mechanism, where the evaporation mechanism includes a cooling cartridge and an evaporator provided in the cooling cartridge; the rotary stirring mechanism includes a protective housing; the evaporation device for a slush machine further includes a sealing ring; one end of the cooling cartridge is provided with a fixed ring; the fixed ring is connected to the protective housing; the sealing ring is provided between the fixed ring and the protective housing; the sealing ring includes an inner sealing ring and an inner sealing portion; the inner sealing ring abuts against an edge of the protective housing; and the inner sealing portion abuts against the fixed ring. The refrigeration system includes the evaporation device for a slush machine. With desirable airtightness and waterproofness, the present disclosure can be connected stably, and can prevent the displacement that affects the waterproof effect.

## Description

### TECHNICAL FIELD

The present disclosure relates to the technical field of slush machines, and in particular to an evaporation device for a slush machine and a refrigeration system.

### BACKGROUND

As a widely used beverage preparation device, the slush machine is mainly intended to prepare liquid such as juice and milk into the smoothie. In this process, the evaporative cooling component and the stirring component play a crucial role. The evaporative cooling component is configured to reduce a temperature of the mixing chamber through circulation of the refrigerant. The stirring component is configured to stir an ice crystal mixture into the smoothie. In the conventional slush machine, to stir the ice crystal mixture conveniently, the evaporative cooling component and the stirring component are connected together. However, a drive motor is provided in the stirring component. For fear of potential safety hazards, the mixing chamber is isolated from the drive motor, and a sealing mechanism is provided for waterproof purpose. The sealing mechanism of the stirring component in the existing slush machine is usually the common sealing gasket. The sealing gasket is provided between the motor protection housing and the mixing chamber. The common sealing gasket is a flat structure with the ordinary sealing effect. Moreover, the drive motor is a moving component, and vibration generated by the drive motor in use may cause a displacement of the sealing gasket and the like. This further reduces the waterproofness to cause the potential safety hazards.

### SUMMARY

A technical problem to be solved by the present disclosure is to provide an evaporation device for a slush machine. With desirable airtightness and waterproofness, the present disclosure can be connected stably, and can prevent the displacement that affects the waterproof effect.

In order to solve the above-mentioned technical problem, the present disclosure provides an evaporation device for a slush machine, including an evaporation mechanism, an outer housing sleeved on the evaporation mechanism, and a rotary stirring mechanism provided at one end of the evaporation mechanism, where the evaporation mechanism includes a cooling cartridge and an evaporator provided in the cooling cartridge; the rotary stirring mechanism includes a protective housing, a drive component provided in the protective housing, and a scraper in transmission connection with the drive component; and the scraper is sleeved on the evaporator and located in the outer housing; and
the evaporation device for a slush machine further includes an elastic sealing ring; one end of the cooling cartridge is provided with a fixed ring; the fixed ring is connected to the protective housing; the sealing ring is provided between the fixed ring and the protective housing; the sealing ring includes an inner sealing ring and an inner sealing portion; the inner sealing ring abuts against an edge of the protective housing; and the inner sealing portion abuts against the fixed ring.

As an improvement to the above solution, the fixed ring is provided at an edge of a side of the cooling cartridge close to the protective housing; the fixed ring extends from the cooling cartridge; a fixing hole is formed in the fixed ring; an end of the protective housing is provided with an inner ring portion; a side of the inner ring portion away from the outer housing is provided with an inner fixing plate; and the cooling cartridge is fixed on the inner fixing plate through the fixing hole.

As an improvement to the above solution, the inner sealing portion is provided at an edge of a side of the inner sealing ring close to the protective housing; the inner sealing portion extends from the edge of the inner sealing ring; and the inner sealing portion is provided between the fixed ring and the inner fixing plate.

As an improvement to the above solution, the inner ring portion is provided with a mounting hole; the inner sealing ring is provided in the mounting hole; an outer wall of the inner sealing ring abuts against an inner wall of the mounting hole; the cooling cartridge passes through the inner sealing ring; and an outer wall of the cooling cartridge abuts against an inner wall of the inner sealing ring.

As an improvement to the above solution, a convex rib is provided on the inner wall of the inner sealing ring; an outer edge of the convex rib is provided on the inner wall of the inner sealing ring; an inner edge of the convex rib extends obliquely inward away from the drive component; a gap is formed between a sidewall of the convex rib and the inner wall of the inner sealing ring; and the convex rib can abut against the outer wall of the cooling cartridge.

As an improvement to the above solution, the sealing ring further includes an outer sealing portion and a front end face; the outer sealing portion, the front end face, and the inner sealing ring enclose a sealing chamber; an outer convex ring is provided in the inner ring portion; the outer convex ring is protruded away from the inner fixing plate; and the outer convex ring is provided in the sealing chamber.

As an improvement to the above solution, the front end face is provided at a side of the inner sealing ring away from the inner sealing portion; the front end face includes an inner edge connected to the inner sealing ring, and an outer edge connected to the outer sealing portion; and from the outer edge of the front end face, the outer sealing portion extends obliquely outward away from the cooling cartridge.

As an improvement to the above solution, the inner ring portion further includes an upper convex plate; the upper convex plate is protruded away from the inner fixing plate; a gap is formed between the upper convex plate and the outer convex ring; the upper convex plate and the outer convex ring enclose a fixing groove; and the outer sealing portion can be inserted into the fixing groove.

As an improvement to the above solution, a plurality of connecting holes are formed in the fixing groove; a side of the outer sealing portion close to the inner ring portion is provided with a plurality of connectors; the connector can be inserted into the connecting hole; the connector includes a first boss end and a second boss end; the second boss end and the first boss end sequentially extend from the connecting hole; the first boss end abuts against the connecting hole; and a cross-sectional width of the connecting hole is less than a cross-sectional width of the first boss end but greater than a cross-sectional width of the second boss end.

The present disclosure further provides a refrigeration system, including the evaporation device for a slush machine, where the sealing ring is made of a rubber material or a silica gel material; and the refrigeration system is an ice cream maker or a slush machine or a smoothie maker.

The present disclosure has the following beneficial effects:
According to the present disclosure, the evaporation device for a slush machine includes an evaporation mechanism, an outer housing, a stirring mechanism, and a sealing ring. The evaporation mechanism includes a cooling cartridge and an evaporator. The evaporator evaporates the refrigerant, such that the cooling cartridge cools the liquid. The rotary stirring mechanism includes a protective housing, a drive component, and a scraper. When the liquid is iced to form the ice crystal mixture, the drive component drives the scraper to stir the ice crystal mixture to form a smoothie. One end of the cooling cartridge is provided with a fixed ring. In order to realize desirable airtightness and waterproofness, the sealing ring includes an inner sealing ring and an inner sealing portion. The inner sealing ring abuts against an edge of the protective housing. The inner sealing portion abuts against the fixed ring. With the inner sealing ring and the inner sealing portion, the present disclosure can be sealed from the inner ring portion and the portion close to the inner side of the protective housing, thereby realizing the desirable airtightness and waterproofness. By fixing from the inner ring portion and the portion close to the inner side of the protective housing, the present disclosure can be fixed well and connected stably, and can prevent the displacement that affects the waterproofness.

### BRIEF DESCRIPTION OF THE DRAWINGS

FIG. 1 is a schematic structural view of an evaporation device for a slush machine according to the present disclosure;
FIG. 2 is a schematic view of a breakdown structure of an evaporation device for a slush machine according to the present disclosure;
FIG. 3 is a partial sectional view of an evaporation device for a slush machine according to the present disclosure;
FIG. 4 is a partial schematic view of a breakdown structure of an evaporation device for a slush machine from a first viewing angle according to the present disclosure;
FIG. 5 is a partial schematic view of a breakdown structure of an evaporation device for a slush machine from a second viewing angle according to the present disclosure; and
FIG. 6 is a partial structural view of a sealing ring according to the present disclosure.

### DETAILED DESCRIPTION

In order to make the objectives, technical solutions, and advantages of the present disclosure clearer, the present disclosure will be further described below in detail with reference to the accompanying drawings. It should be noted that orientation terms such as "upper", "lower", "left", "right", "front", "rear", "inner", and "outer" that appear or are about to appear in the present disclosure are only based on the accompanying drawings of the present disclosure, and do not specifically limit the present disclosure.

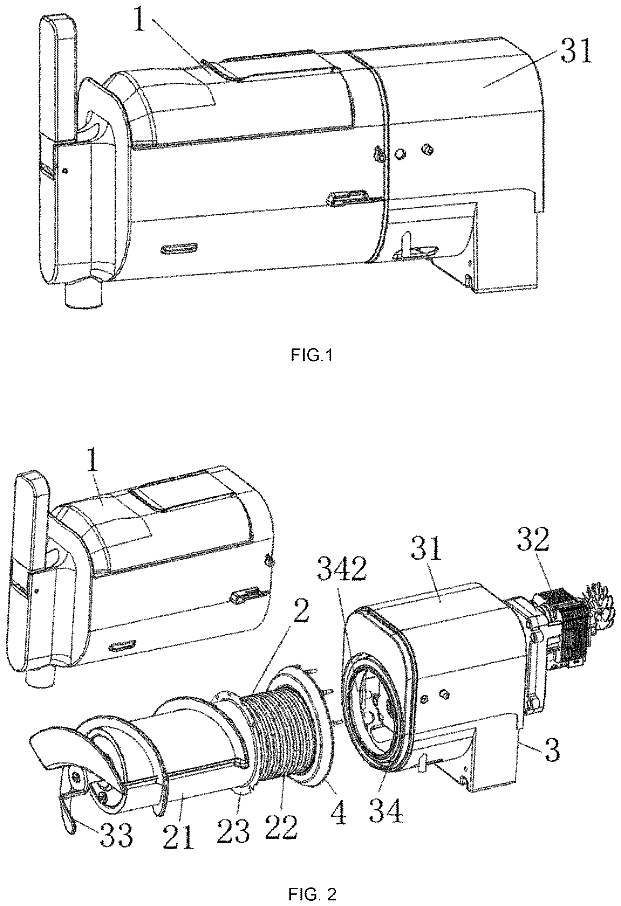

Referring to FIG. 1 and FIG. 2, an embodiment of the present disclosure provides an evaporation device for a slush machine, including an evaporation mechanism 2, an outer housing 1 sleeved on the evaporation mechanism 2, and a rotary stirring mechanism 3 provided at one end of the evaporation mechanism 2. The outer housing 1 is configured to accommodate liquid. The liquid is cooled and iced by the evaporation mechanism 2 in the outer housing 1. An ice crystal mixture is stirred by the stirring mechanism, such that the liquid is iced uniformly and the ice crystal mixture cannot form a chunk. The evaporation mechanism 2 includes a cooling cartridge 21 and an evaporator 22 provided in the cooling cartridge 21. A refrigerant is evaporated in the evaporator 22 to absorb heat. The liquid exchanges the heat through the cooling cartridge 21. The ice crystal mixture is iced on a surface of the cooling cartridge 21. The rotary stirring mechanism 3 includes a protective housing 31, a drive component 32 provided in the protective housing 31, and a scraper 33 in transmission connection with the drive component 32. The scraper 33 is sleeved on the evaporator 22 and located in the outer housing 1. In icing, the drive component 32 drives the scraper 33 to rotate cyclically around the cooling cartridge 21, so as to drive the ice crystal mixture to flow on the surface of the cooling cartridge 21. This prevents ice crystals from gathering to a lower portion of the outer housing 1, improves the icing uniformity, and can also prevent the ice crystal mixture from forming a large chunk.

The protective housing 31 is configured to protect the drive component 32. The protective housing 31 is provided at a side of the outer housing 1. The cooling cartridge 21 is connected to the protective housing 31. In use, there is a need to prevent liquid outside the cooling cartridge 21 from entering the protective housing 31. In order to improve airtightness and waterproofness, the evaporation device for a slush machine further includes a sealing ring 4. The sealing ring 4 is elastic, and can take a desirable sealing effect. One end of the cooling cartridge 21 is provided with a fixed ring 23. The fixed ring 23 is connected to the protective housing 31. The sealing ring 4 is provided between the fixed ring 23 and the protective housing 31, and configured to take a waterproof effect between the cooing cartridge 21 and the protective housing 31. The sealing ring 4 includes an inner sealing ring 41 and an inner sealing portion 42. The inner sealing ring 41 is provided on an inner ring of the sealing ring 4. The inner sealing portion 42 is provided at a side of the sealing ring 4 close to the protective housing 31. The inner sealing ring 41 abuts against an edge of the protective housing 31. The inner sealing portion 42 abuts against the fixed ring 23. Therefore, the evaporation device can be sealed from two portions, thereby improving the waterproofness and airtightness, and increasing the fixed position. By fixing in two directions, the evaporation device is connected stably.

The embodiment of the present disclosure has the following beneficial effects:
According to the embodiment of the present disclosure, the evaporation device for a slush machine includes an evaporation mechanism 2, an outer housing 1, a stirring mechanism, and a sealing ring 4. The evaporation mechanism 2 includes a cooling cartridge 21 and an evaporator 22. The evaporator 22 evaporates the refrigerant, such that the cooling cartridge 21 cools the liquid. The rotary stirring mechanism 3 includes a protective housing 31, a drive component 32, and a scraper 33. When the liquid is iced to form the ice crystal mixture, the drive component 32 drives the scraper 33 to stir the ice crystal mixture to form a smoothie. One end of the cooling cartridge 21 is provided with a fixed ring 23. In order to realize desirable airtightness and waterproofness, the sealing ring 4 is elastic. The sealing ring 4 includes an inner sealing ring 41 and an inner sealing portion 42. The inner sealing ring 41 abuts against an edge of the protective housing 31. The inner sealing portion 42 abuts against the fixed ring 23. With the inner sealing ring 41 and the inner sealing portion 42, the evaporation device can be sealed from the inner ring portion 34 and the portion close to the inner side of the protective housing 31, thereby realizing desirable airtightness and waterproofness. By fixing from the inner ring portion 34 and the portion close to the inner side of the protective housing 31, the evaporation device can be fixed well and connected stably, and can prevent the displacement that affects the waterproofness.

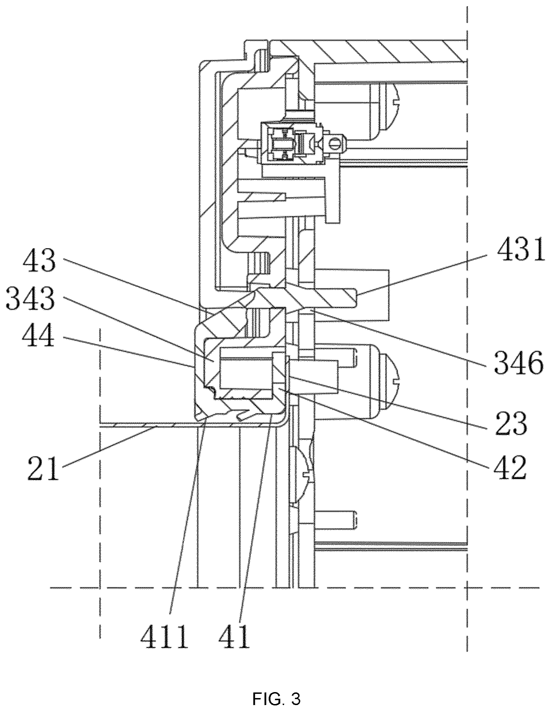

Specifically, referring to FIG. 3, the fixed ring 23 is provided at an edge of a side of the cooling cartridge 21 close to the protective housing 31. The fixed ring 23 extends from the cooling cartridge 21 to form a flange shape. A fixing hole 231 is formed in the fixed ring 23. An end of the protective housing 31 is provided with an inner ring portion 34. A side of the inner ring portion 34 away from the outer housing 1 is provided with an inner fixing plate 341. The cooling cartridge 21 is fixed on the inner fixing plate 341 through the fixing hole 231. In mounting, the cooling cartridge 21 passes through the inner ring portion 34. The inner fixing plate 341 limits the fixed ring 23. Then, by fixing the fixing hole 231 with a fastener such as a bolt, the cooling cartridge 21 and the protective housing 31 can be connected.

The inner sealing portion 42 is provided at an edge of a side of the inner sealing ring 41 close to the protective housing 31. The inner sealing portion 42 extends from the edge of the inner sealing ring 41. The inner sealing portion 42 is provided between the fixed ring 23 and the inner fixing plate 341. In mounting, the sealing ring 4 is fixed in the inner ring portion 34, with the inner sealing portion 42 abutting against the inner fixing plate 341. Then, the cooling cartridge 21 is operated from the other side to sequentially pass through the inner sealing ring 41 and the inner ring portion 34. The fixed ring 23 can abut against the inner fixing plate 341.

Referring to FIG. 2, in order that the cooling cartridge 21 can pass through the inner ring portion 34, the inner sealing portion 34 is provided with a mounting hole 342. The inner sealing ring 41 is provided in the mounting hole 342. The inner sealing ring 41 can be bucked into the mounting hole 342. After the mounting, an outer wall of the inner sealing ring 41 abuts against an inner wall of the mounting hole 342. The cooling cartridge 21 passes through the inner sealing ring 41. An outer wall of the cooling cartridge 21 abuts against an inner wall of the inner sealing ring 41. Therefore, the sealing ring 4 is not only sealed and fixed in a vertical direction through the inner sealing portion 42 and the fixed ring 23, but also sealed and fixed in a horizontal direction through the mounting hole 342 and the inner sealing ring 41.

Further, a convex rib 411 is provided on the inner wall of the inner sealing ring 41. An outer edge of the convex rib 411 is provided on the inner wall of the inner sealing ring 41. An inner edge of the convex rib 411 extends obliquely inward away from the drive component 32. An inclination direction of the convex rib 411 is the same as an insertion direction of the cooling cartridge 21, such that the mounting of the cooling cartridge 21 is not hindered. A gap is formed between a sidewall of the convex rib 411 and the inner wall of the inner sealing ring 41. The gap can serve for buffering in the mounting. The convex rib 411 can abut against the outer wall of the cooling cartridge 21 for sealing. In the embodiment of the present disclosure, there are two convex ribs 411, and may also be a plurality of convex ribs, so as to further improving the sealing.

Further, referring to FIG. 3 to FIG. 5, the sealing ring 4 further includes an outer sealing portion 43 and a front end face 44. The outer sealing portion 43, the front end face 44, and the inner sealing ring 41 enclose a sealing chamber 45. An outer convex ring 343 is provided in the inner ring portion 34. The outer convex ring 343 is protruded away from the inner fixing plate 341. The outer convex ring 343 is provided in the sealing chamber 45. The outer sealing portion 43 and the front end face 44 realize the airtightness and waterproofness for the protective housing 31 from a side opposite to the inner sealing portion 42. The outer convex ring 343 serves to limit the sealing chamber 45.

The front end face 44 is provided at a side of the inner sealing ring 41 away from the inner sealing portion 42. The front end face 44 includes an inner edge connected to the inner sealing ring 41, and an outer edge connected to the outer sealing portion 43. From the outer edge of the front end face 44, the outer sealing portion 43 extends obliquely outward away from the cooling cartridge 21. The outer sealing portion 43 can stop the liquid from the inner sealing ring 41 to further improve the waterproofness and airtightness.

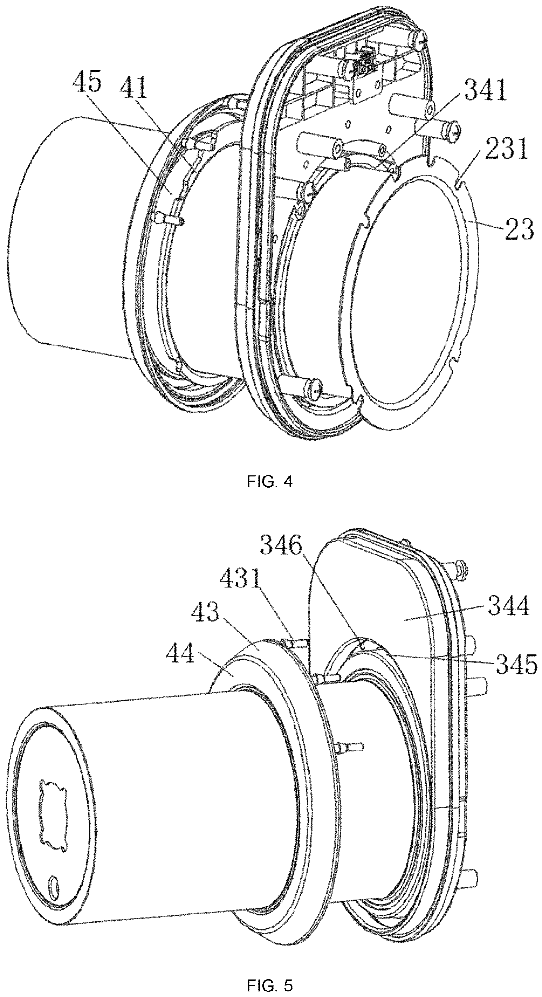

Referring to FIG. 5, the inner ring portion 34 further includes an upper convex plate 344. The upper convex plate is protruded away from the inner fixing plate 341. A gap is formed between the upper convex plate 344 and the outer convex ring 343. The upper convex plate 344 and the outer convex ring 343 enclose a fixing groove 345. The outer sealing portion 43 can be inserted into the fixing groove 345. The fixing groove 345 can limit the outer sealing portion 43. Moreover, a plurality of connecting holes 346 are formed in the fixing groove 345. A side of the outer sealing portion 43 close to the inner sealing ring 34 is provided with a plurality of connectors 431. When the sealing ring 4 is mounted, the connector 431 can be inserted into the connecting hole 346, such that a very firm connection can be formed to prevent the displacement that affects the waterproofness.

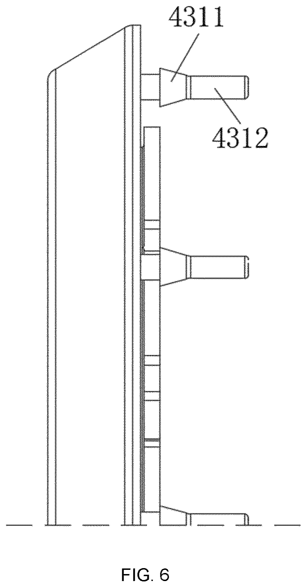

Referring to FIG. 6, the connector 431 includes a first boss end 4311 and a second boss end 4312. The first boss end 4311 and the second boss end 4312 are formed integrally. The first boss end 4311 and the second boss end 4312 can be inserted into the connecting hole 346. After inserted into the connecting hole 346, the second boss end 4312 and the first boss end 4311 sequentially extend from the connecting hole 346. The first boss end 4311 abuts against the connecting hole 346. A cross-sectional width of the connecting hole 346 is less than a cross-sectional width of the first boss end 4311 but greater than a cross-sectional width of the second boss end 4312, so the first boss end 4311 and the second boss end 4312 can be inserted into the connecting hole 346 sequentially. After inserted into the connecting hole, the first boss end 4311 can abut against the connecting hole 346, without moving out of the connecting hole 346, thereby forming the firm connection. Since the cross-sectional width of the connecting hole 346 is less than the cross-sectional width of the first boss end 4311 but greater than the cross-sectional width of the second boss end 4312, the second boss end 4312 can be inserted into the connecting hole 346 smoothly, and then the first boss end 4311 is inserted into the connecting hole 346. This is convenient for the connector 431 to pass through the connecting hole 346 more smoothly.

An embodiment of the present disclosure further provides a refrigeration system (not shown in the figure), including the evaporation device for a slush machine. The sealing ring 4 is made of a rubber material or a silica gel material. The sealing ring 4 made of the rubber material shows desirable elasticity and desirable deformability, and thus can be adapted to sealing surfaces of different shapes and different materials. This effectively fills the tiny leakage gap to realize excellent airtightness and excellent waterproofness. The evaporation device for a slush machine is provided between the protective housing 31 and the cooling cartridge 21. The sealing ring 4 includes the inner sealing ring 41 and the inner sealing portion 42. The inner sealing ring 41 abuts against the edge of the protective housing 31, and the inner sealing portion 42 abuts against the fixed ring 23, so the evaporation device can be sealed from a vertical direction and a horizontal direction to achieve the desirable waterproofness. By fixing from the inner ring portion 34 and the portion close to the inner side of the protective housing 31, the evaporation device can achieve the desirable fixation, and can prevent the displacement that affects the waterproofness. The refrigeration system is an ice cream maker or a slush machine or a smoothie maker, and can manufacture an ice cream, a popsicle or a smoothie, or the like.

The above are merely preferred implementations of the present disclosure. It should be noted that a person of ordinary skill in the art may further make several improvements and modifications without departing from the principle of the present disclosure. These improvements and modifications should fall within the protection scope of the present disclosure.

## Claims

1. An evaporation device for a slush machine, comprising an evaporation mechanism, an outer housing sleeved on the evaporation mechanism, and a rotary stirring mechanism provided at one end of the evaporation mechanism, wherein the evaporation mechanism comprises a cooling cartridge and an evaporator provided in the cooling cartridge; the rotary stirring mechanism comprises a protective housing, a drive component provided in the protective housing, and a scraper in transmission connection with the drive component; and the scraper is sleeved on the evaporator and located in the outer housing; and
the evaporation device for a slush machine further comprises an elastic sealing ring; one end of the cooling cartridge is provided with a fixed ring; the fixed ring is connected to the protective housing; the sealing ring is provided between the fixed ring and the protective housing; the sealing ring comprises an inner sealing ring and an inner sealing portion; the inner sealing ring abuts against an edge of the protective housing; and the inner sealing portion abuts against the fixed ring.

2. The evaporation device for a slush machine according to claim 1, wherein the fixed ring is provided at an edge of a side of the cooling cartridge close to the protective housing; the fixed ring extends from the cooling cartridge; a fixing hole is formed in the fixed ring; an end of the protective housing is provided with an inner ring portion; a side of the inner ring portion away from the outer housing is provided with an inner fixing plate; and the cooling cartridge is fixed on the inner fixing plate through the fixing hole.

3. The evaporation device for a slush machine according to claim 2, wherein the inner sealing portion is provided at an edge of a side of the inner sealing ring close to the protective housing; the inner sealing portion extends from the edge of the inner sealing ring; and the inner sealing portion is provided between the fixed ring and the inner fixing plate.

4. The evaporation device for a slush machine according to claim 2, wherein the inner ring portion is provided with a mounting hole; the inner sealing ring is provided in the mounting hole; an outer wall of the inner sealing ring abuts against an inner wall of the mounting hole; the cooling cartridge passes through the inner sealing ring; and an outer wall of the cooling cartridge abuts against an inner wall of the inner sealing ring.

5. The evaporation device for a slush machine according to any one of claims 1-4 , wherein a convex rib is provided on the inner wall of the inner sealing ring; an outer edge of the convex rib is provided on the inner wall of the inner sealing ring; an inner edge of the convex rib extends obliquely inward away from the drive component; a gap is formed between a sidewall of the convex rib and the inner wall of the inner sealing ring; and the convex rib abuts against the outer wall of the cooling cartridge.

6. The evaporation device for a slush machine according to any one of claims 1-4, wherein the sealing ring further comprises an outer sealing portion and a front end face; the outer sealing portion, the front end face, and the inner sealing ring enclose a sealing chamber; an outer convex ring is provided in the inner ring portion; the outer convex ring is protruded away from the inner fixing plate; and the outer convex ring is provided in the sealing chamber.

7. The evaporation device for a slush machine according to claim 6, wherein the front end face is provided at a side of the inner sealing ring away from the inner sealing portion; the front end face comprises an inner edge connected to the inner sealing ring, and an outer edge connected to the outer sealing portion; and from the outer edge of the front end face, the outer sealing portion extends obliquely outward away from the cooling cartridge.

8. The evaporation device for a slush machine according to any one of claims 1-4, wherein the inner ring portion further comprises an upper convex plate; the upper convex plate is protruded away from the inner fixing plate; a gap is formed between the upper convex plate and an outer convex ring; the upper convex plate and the outer convex ring enclose a fixing groove; and an outer sealing portion is inserted into the fixing groove.

9. The evaporation device for a slush machine according to claim 8, wherein a plurality of connecting holes are formed in the fixing groove; a side of the outer sealing portion close to the inner ring portion is provided with a plurality of connectors; the connector is inserted into the connecting hole; the connector comprises a first boss end and a second boss end; the second boss end and the first boss end sequentially extend from the connecting hole; the first boss end abuts against the connecting hole; and a cross-sectional width of the connecting hole is less than a cross-sectional width of the first boss end but greater than a cross-sectional width of the second boss end.

10. A refrigeration system, comprising the evaporation device for a slush machine according to any one of claims 1-9, wherein the sealing ring is made of a rubber material or a silica gel material; and the refrigeration system is an ice cream maker or a slush machine or a smoothie maker.
